# EUROPÄISCHE PATENTSCHRIFT

(11) **EP 2 737 790 B1**
(45) Veröffentlichungstag und Bekanntmachung des Hinweises auf die Patenterteilung: **25.05.2016**
(21) Anmeldenummer: 13005427.3
(22) Anmeldetag: 19.11.2013
(51) Int. Cl.: A01G 3/02

(54) **Gartenschere**
Secateur
Sécateur

(30) Priorität: 28.11.2012 DE 102012023295
(43) Veröffentlichungstag der Anmeldung: 04.06.2014
(73) Patentinhaber: MTD PRODUCTS INC., Valley City, Ohio 44280 (US)
(72) Erfinder: Kubik, Ingo, D-66606 St. Wendel (DE); Lißmann, Markus, D-66640 Namborn-Baltersweiler (DE)
(74) Vertreter: Feldkamp, Rainer

(56) Entgegenhaltungen:
- DE-U1-202008 013 249
- US-A1- 2005 193 498
- US-A1- 2008 184 567

## Beschreibung

Die Erfindung bezieht sich auf eine Gartenschere der im Oberbegriff des Anspruchs 1 genannten Art.

Bekannte Gartenscheren werden in den meisten Fällen mit einer Feder versehen, die die beiden Klingen der Schere in Öffnungsrichtung vorspannen, wobei Begrenzungseinrichtungen vorgesehen sind, um das Ausmaß der Öffnung der Klingen zu begrenzen.

Derartige Öffnungsbegrenzungen weisen in vielen Fällen einen komplizierten und störungsanfälligen Aufbau mit einer Vielzahl von Teilen auf, was aus fertigungstechnischen Gründen unerwünscht ist.

Aus der DE 202008013249 U1 ist eine Gartenschere bekannt, bei der eine Begrenzungseinrichtung für die Schließbewegung der beiden Klingen aufeinander vorgesehen ist. Zu diesem Zweck ist im Inneren einer Feder, zwischen den Handgriffen der Gartenschere angeordnet ist und die Klingen in Öffnungsrichtung gegeneinander vorspannt, eine Anschlageinrichtung vorgesehen, die aus jeweiligen zwischen den Handgriffen der Gartenschere angeordneten Anschlageinrichtungen besteht, die beim Schließen der Klingen aufeinander stoßen und die Schließbewegung der Gartenschere begrenzen. Eine Begrenzung der Öffnungsbewegung kann nur durch zusätzliche Einrichtungen im Bereich der Drehverbindung der beiden Klingen erreicht werden.

Der Erfindung liegt die Aufgabe zugrunde, eine Gartenschere der eingangs genannten Art zu schaffen, bei der die Öffnungsbegrenzung einen einfachen und zuverlässigen Aufbau aufweist.

Diese Aufgabe wird durch die im Patentanspruch 1 angegebenen Merkmale gelöst.

Die erfindungsgemäße Gartenschere weist in üblicher Weise eine erste Klinge und eine zweite Klinge auf, die durch jeweilige Handgriffe verlängert sind und über eine Gelenkverbindung drehbar miteinander verbunden sind, wobei die Gelenkverbindung einen Schwenkbolzen umfasst, der jeweilige Bohrungen der ersten und zweiten Klinge durchquert und die Klingen in Axialrichtung des Schwenkbolzens festlegt.

Der Schwenkbolzen weist in seiner Axialrichtung aufeinander folgende erste und zweite Umfangsabschnitte auf, von denen der erste Umfangsabschnitt gemäß der Erfindung über einen begrenzten Winkelbereich drehbar in der Bohrung der ersten Klinge angeordnet ist, während der zweite Umfangsabschnitt drehfest in der Bohrung der zweiten Klinge befestigt ist.

Gemäß der Erfindung weist der erste Umfangsabschnitt des Schwenkbolzens einen im Wesentlichen kreisrunden Querschnitt auf, während der zweite Umfangsabschnitt zumindest eine Abflachung aufweist, die mit einer entsprechenden Abflachung der Bohrung der zweiten Klinge in Eingriff steht, so dass der Schwenkbolzen drehfest mit der zweiten Klinge verbunden ist, und dass der Schwenkbolzen im Bereich des ersten Umfangsabschnittes einen Vorsprung aufweist, der sich in eine sich radial erstreckende Erweiterung der Bohrung der Schneide erstreckt, wobei die Winkelerstreckung der Erweiterung um die Längsachse des Schwenkbolzens größer als die Winkelerstreckung des Vorsprungs ist, so dass sich die beiden Klingen über einen begrenzten Windelbereich gegeneinander bewegen können.

Der erste Umfangsabschnitt und der zweite Umfangsabschnitt weisen vorzugsweise eine axiale Länge auf, die im Wesentlichen der Materialstärke der ersten bzw. zweiten Klinge im Bereich der der jeweiligen Bohrung entspricht.

Gemäß einer Ausgestaltung der Erfindung weist der Schwenkbolzen an seinem dem ersten Umfangsabschnitt benachbarten Ende einen radial vorspringenden Flansch auf, der mit einer Fläche an der außen liegenden Hauptfläche der ersten Klinge anliegt, und der Vorsprung ist durch einen Stift gebildet, der sich axial durch den Flansch in einen Bereich benachbart zu dem ersten Umfangsabschnitt erstreckt.

Selbstverständlich ist es genauso möglich, den Vorsprung durch beispielsweise eine Rippe auf dem ersten Umfangsabschnitt des Schwenkbolzens auszubilden. Unabhängig von der vorliegenden Erfindung ist es weiterhin auch eine kinematische Umkehr denkbar, bei der die Bohrung der ersten Klinge einen in das Innere der Bohrung vorspringenden Vorsprung aufweist, der in eine sich über einen entsprechenden Winkelbereich erstreckende Aussparung des ersten Umfangsabschnittes des Schwenkbolzens eingreift.

Die Gelenkverbindung kann weiterhin einen zweiten Teil umfassen, der einen Flansch aufweist, der mit einer Fläche an der außen liegenden Hauptfläche der zweiten Klinge anliegt.

Der Schwenkbolzen kann an seinem der zweiten Umfangsabschnitt benachbarten Ende eine Gewindebohrung aufweisen, während der zweite Teil der Gelenkverbindung einen Gewindebolzen aufweist, der in die Gewindebohrung eingeschraubt ist.

Es ist weiterhin möglich, dass der Schwenkbolzen einen eine Verlängerung des zweiten Umfangsabschnittes bildenden Gewindeabschnitt aufweist, auf den eine auf der Außenseite der zweiten Schneide liegende Gewindemutter aufschraubbar ist, die den zweiten Teil der Gelenkverbindung bildet.

Die Erfindung wird im Folgenden anhand eines in der Zeichnung dargestellten Ausführungsbeispiels noch näher erläutert.

In der Zeichnung zeigen:
Figur 1 die beiden Klingen einer Gartenschere zusammen mit der diese verbindenden Gelenkverbindung;
Figur 2 weitere Einzelheiten der Gelenkverbindung der beiden Klingen.

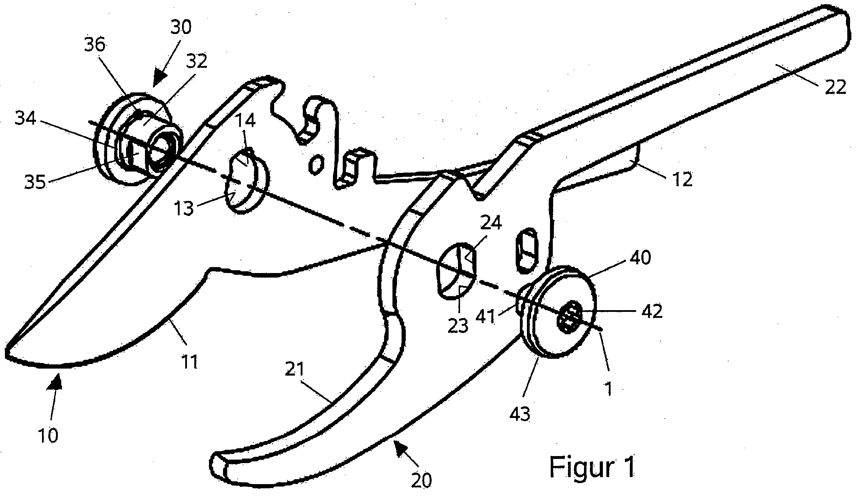

In Figur 1 sind eine erste Klinge 10 und eine zweite Klinge 20 dargestellt, die mit jeweiligen Handgriffen 12 bzw. 22 versehen sind, wobei die bei den Gartenscheren üblichen Kunststoffummantelungen der Griffe 12, 22 der Übersichtlichkeit halber fortgelassen sind.

Die Klinge 10 kann beispielsweise eine Schneide 11 aufweisen, die mit einer Gegenschneide 21 an der zweiten Klinge 20 zusammenwirkt.

Die beiden Klingen 10, 20 sind über eine Gelenkverbindung 30, 40 miteinander drehbar verbunden, wobei bei der dargestellten Ausführungsform die Gelenkverbindung einen ersten Teil 30 in Form eines Schwenkbolzens 32 mit einer Gewindebohrung 33 und einen zweiten Teil in Form einer Schraube 40 mit einem radial vorspringenden Flansch 43 und einem Gewindebolzen 41 umfasst.

Die Schraube 40 weist weiterhin einen Werkzeugansatz 42, beispielsweise in Form eines Schlitzes oder Innensechskants, auf.

Diese Anordnung kann jedoch genauso umgekehrt sein, das heißt, dass der den ersten Teil 30 der Gelenkverbindung bildende Schwenkbolzen anstelle einer Gewindebohrung 33 einen Gewindeansatz aufweist, auf den eine auf der Außenseite der zweiten Klinge 20 liegende Mutter aufschraubbar ist.

Der Schwenkbolzen 32 umfasst in seiner Längsrichtung einen ersten, im Wesentlichen kreisrunden Umfangsabschnitt 34, der zur Anordnung in einer Bohrung 13 der ersten Klinge 10 bestimmt ist und eine Länge in Axialrichtung des schwenkbolzens 32 aufweist, die im Wesentlichen der Dicke der ersten Klinge im Bereich der Bohrung 13 entspricht.

Der Schwenkbolzen 32 weist weiterhin zumindest einen zweiten, auf den ersten Umfangsabschnitt folgenden Umfangsabschnitt mit zumindest einer Abflachung 35 auf, die eine sich in Axialrichtung des Schwenkbolzens 32 erstreckenden Länge aufweist, die im Wesentlichen der Dicke der zweiten Klinge 20 entspricht, wobei die Bohrung 23 in der zweiten Klinge komplementäre Abflachungen 24 aufweist, so dass der Schwenkbolzen 32 mit der zweiten Klinge 20 drehfest verbunden ist, während der einen kreisrunden Querschnitt aufweisende Abschnitt 34 des Schwenkbolzens 32 frei drehbar in der Bohrung 13 der ersten Klinge angeordnet ist, jedoch eine nachfolgend näher erläuterte Begrenzung der Drehbewegung aufweist.

Unabhängig von der vorliegenden Erfindung kann anstelle der zumindest einen Abflachung der zweite Umfangsabschnitt auch eine andere, von der kreisrunden Querschittsform abweichende Querschnittsform aufweisen, die zusammen mit einer hierzu komplementären Querschnittsform der Bohrung der zweiten Klinge 20 eine drehfeste Verbindung mit dieser ergibt.

Die Begrenzung der Drehbewegung und damit die Begrenzung der Öffnungsweite der beiden Klingen 10, 20 wird durch einen Vorsprung 36 des Schwenkbolzens 32 des ersten Befestigungsteils erreicht, der radial gegenüber dem ersten Umfangsabschnitt 34 vorspringt und mit einem Abschnitt 14 der Bohrung 13 der ersten Schneide zusammenwirkt, die einen größeren radialen Abstand von der Schwenkachse 1 aufweist, als der übrige kreisrunde Umfang der Bohrung 13.

Durch entsprechende Wahl der Winkelerstreckung des Vorsprungs 36 bzw. der Erweiterung 14 der Bohrung 13 ist eine gewünschte Begrenzung des Winkels der Öffnungsbewegung der beiden Klingen 10, 20 gegeneinander zu erreichen.

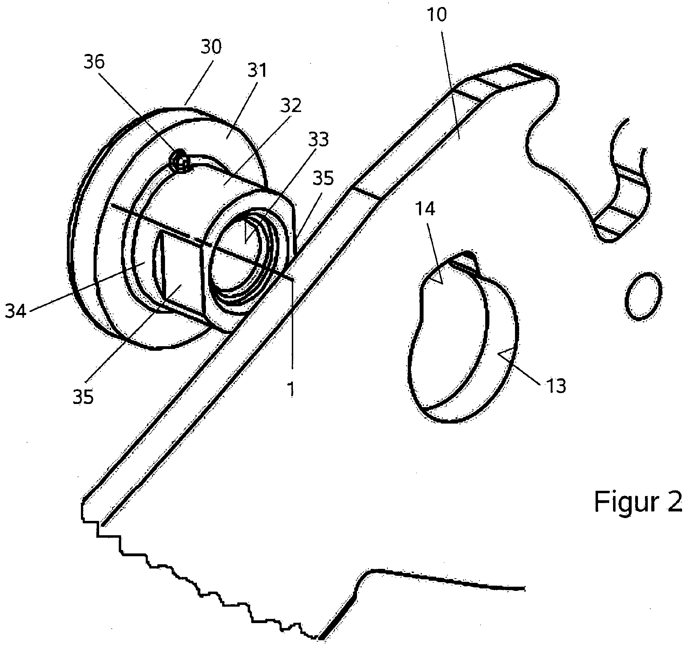

In den Figuren 1 und 2 ist der Vorsprung 36 als Zapfen oder Stift gezeigt, der sich durch den Flansch 31 des ersten Befestigungsteils 30 hindurch erstreckt oder von diesem vorspringt.

Genauso könnte jedoch der Vorsprung 36 durch einen von dem ersten Umfangsabschnitt 34 ausgehenden Vorsprung oder eine Rippe auf dem kreisrunden ersten Umfangsabschnitt 34 des Schwenkbolzens 32 oder eine andere Art von Vorsprung gebildet sein.

Weiterhin, und unabhängig von der vorliegenden Erfindung, ist auch eine kinematische Umkehr denkbar, bei der die Bohrung der ersten Klinge 10 einen in das Innere der Bohrung vorspringenden Vorsprung aufweist, der in eine sich über einen entsprechenden Winkelbereich erstreckende Aussparung des ersten Umfangsabschnittes 34 des Schwenkbolzens 32 eingreift.

## Patentansprüche

1. Gartenschere mit einer ersten Klinge (10) und einer zweiten Klinge (20), die jeweilige Handgriffe (12 bzw. 22) aufweisen und über eine Gelenkverbindung (13, 23, 30, 41) drehbar miteinander verbunden sind, wobei die Gelenkverbindung einen Schwenkbolzen (32) umfasst, der jeweilige Bohrungen (13, 23) der ersten und zweiten Klinge (10 bzw. 20) durchquert und die Klingen (10, 20) in Axialrichtung des Schwenkbolzens (32) festlegt, wobei der Schwenkbolzen (32) in seiner Axialrichtung aufeinander folgende erste und zweite Umfangsabschnitte (34, 35) aufweist, von denen der erste Umfangsabschnitt (34) einen im Wesentlichen kreisrunden Querschnitt aufweist, während der zweite Umfangsabschnitt zumindest eine Abflachung (35) aufweist, die mit einer entsprechenden Abflachung (24) der Bohrung (23) der zweiten Klinge (20) in Eingriff steht, so dass der Schwenkbolzen (32) drehfest mit der zweiten Klinge (20) verbunden ist,
**dadurch gekennzeichnet, dass** der erste Umfangsabschnitt (34) über einen begrenzten Winkelbereich drehbar in der Bohrung (13) der ersten Klinge (10) angeordnet ist, und dass der Schwenkbolzen im Bereich des ersten Umfangsabschnittes (34) einen Vorsprung (36) aufweist, der sich in eine sich radial erstreckende Erweiterung (14) der Bohrung (13) der Klinge (10) erstreckt, wobei die Winkelerstreckung der Erweiterung (14) um die Längsachse (1) des Schwenkbolzens (32) größer als die Winkelerstreckung des Vorsprungs (36) ist, so dass sich die beiden Klingen über einen begrenzten Winkelbereich gegeneinander bewegbar sind.

2. Gartenschere nach Anspruch 1, **dadurch gekennzeichnet, dass** der erste Umfangsabschnitt (34) und der zweite Umfangsabschnitt (35) eine axiale Länge aufweisen, die im Wesentlichen der Materialstärke der ersten bzw. zweiten Klinge (10, 20) im Bereich der der jeweiligen Bohrung (13, 23) entspricht.

3. Gartenschere nach einem der Ansprüche 1 oder 2, **dadurch gekennzeichnet, dass** der Schwenkbolzen (32) einen an der außen liegenden Seite der ersten Klinge (10) anliegenden Flansch (31) aufweist.

4. Gartenschere nach einem der Ansprüche 1 oder 2, **dadurch gekennzeichnet, dass** der Schwenkbolzen (32) an seinem dem ersten Umfangsabschnitt (34) benachbarten Ende einen radial vorspringenden Flansch (31) aufweist, der mit einer Fläche an der außen liegenden Hauptfläche der ersten Klinge (10) anliegt, und dass der Vorsprung (36) durch einen Stift (36) gebildet ist, der sich axial durch den Flansch (31) in einen Bereich benachbart zu dem ersten Umfangsabschnitt (34) erstreckt.

5. Gartenschere nach Anspruch 4, **dadurch gekennzeichnet, dass** die Gelenkverbindung (13, 23, 30, 41) weiterhin einen zweiten Teil (40) umfasst, der einen Flansch (43) aufweist, der mit einer Fläche an der außen liegenden Hauptfläche der zweiten Klinge (20) anliegt.

6. Gartenschere nach Anspruch 5, **dadurch gekennzeichnet, dass** der Schwenkbolzen (32) an seinem der zweiten Umfangsabschnitt benachbarten Ende eine Gewindebohrung (33) aufweist, und dass der zweite Teil (40) der Gelenkverbindung (13, 23, 30, 41) einen Gewindebolzen aufweist, der in die Gewindebohrung (33) eingeschraubt ist.

7. Gartenschere nach Anspruch 5, **dadurch gekennzeichnet, dass** der Gewindebolzen (32) einen eine Verlängerung des zweiten Umfangsabschnittes (35) bildenden Gewindeabschnitt aufweist, auf den eine auf der Außenseite der zweiten Schneide liegende Gewindemutter aufschraubbar ist, die den zweiten Teil der Gelenkverbindung (13, 23, 30, 41) bildet.

## Claims

1. Garden shears comprising a first blade (10) and a second blade (20) having respective hand grips (12 and 22, respectively) and pivotably mounted to one another by means of a pivot connection (13, 23, 30, 41), wherein the pivot connection comprises a pivot bolt (32) that passes through respective bores (13, 23) of the first and second blades (10 and 20, respectively) and fixes the blades (10, 20) to one another in the axial direction of the pivot bolt (32), wherein the pivot bolt (32) comprises, in its axial direction, successive first and second peripheral portions (34, 35), the first peripheral portion (34) of which has a substantially circular cross-section while the second peripheral portion has at least one flat (35) which engages with a corresponding flat (24) of the bore (23) of the second blade (20) such that the pivot bolt (32) is not-rotatably connected to the second blade (20),
**characterized in that** the first peripheral portion (34) is disposed in the bore (13) of the first blade (10) to be rotatable over a limited angular range, and that the pivot bolt, in the region of the first peripheral portion (34), has a projection (36) extending into a radially directed extension (14) of the bore (13) of the blade (10), the angular extent of the extension (14) about the longitudinal axis (1) of the pivot bolt (32) being larger than the angular extent of the projection (36) such that the two blades can be moved over a limited angular range with respect to one another.

2. The garden shears according to claim 1, **characterized in that** the first peripheral portion (34) and the second peripheral portion (35) have an axial length which substantially corresponds to the material thickness of the first and second blades (10, 20), respectively, in the region of the respective bore (13, 23).

3. The garden shears according to any one of claims 1 or 2, **characterized in that** the pivot bolt (32) has a flange (31) that rests against the outer side of the first blade (10).

4. The garden shears according to any one of claims 1 or 2, **characterized in that** the pivot bolt (32), at its end adjacent to the first peripheral portion (34), comprises a radially projecting flange (31) that rests with a surface against the outer main surface of the first blade (10), and that the projection (36) is formed by a pin (36) that extends axially through the flange (31) into a region adjacent to the first peripheral portion (34).

5. The garden shears according to claim 4, **characterized in that** the pivot connection (13, 23, 30, 41) further comprises a second portion (40) having a flange (43) which rests with a surface against the outer main surface of the second blade (20).

6. The garden shears according to claim 5, **characterized in that** the pivot bolt (32) comprises at its end adjacent to the second peripheral portion a threaded bore (33), and that the second portion (40) of the pivot connection (13, 23, 30, 41) has a threaded bolt which is screwed into the threaded bore (33).

7. The garden shears according to claim 5, **characterized in that** the threaded bolt (32) has a threaded portion forming an extension of the second peripheral portion (35), wherein a threaded nut, which is positioned on the outer side of the second blade and forms the second portion of the pivot connection (13, 23, 30, 41), can be screwed onto said threaded portion.

## Revendications

1. Sécateur comportant une première lame (10) et une seconde lame (20) qui présentent des manches respectifs (12 ou 22) et sont reliées entre elles de manière rotative par une liaison articulée (13, 23, 30, 41), la liaison articulée comprenant un goujon pivotant (32) qui traverse des alésages respectifs (13, 23) des première et seconde lame s (10 ou 20) et fixe les lames (10, 20) dans le sens axial du goujon pivotant (32), le goujon pivotant (32) présentant dans son sens axial des première et seconde sections circonférentielles (34, 35) dont la première section circonférentielle (34) présente une section transversale sensiblement circulaire, tandis que la seconde section circonférentielle présente au moins un aplatissement (35) qui s'engrène dans un aplatissement correspondant (24) de l'alésage (23) de la seconde lame (20), de sorte que le goujon pivotant (32) est relié de manière fixe en rotation à la seconde lame (20),
**caractérisé en ce que** la première section circonférentielle (34) est disposée de manière rotative par une zone angulaire limitée dans l'alésage (13) de la première lame (10) et que le goujon pivotant présente, au niveau de la première section circonférentielle (34), une saillie (36) qui s'étend dans une extension orientée radialement (14) de l'alésage (13) de la lame (10), l'extension angulaire de l'extension (14) autour de de l'axe longitudinal (1) du goujon pivotant (32) étant supérieure à l'extension angulaire de la saillie (36), de sorte que les deux lames sont mobiles l'une par rapport à l'autre sur une zone angulaire limitée.

2. Sécateur selon la revendication 1, **caractérisé en ce que** la première section circonférentielle (34) et la seconde section circonférentielle (35) présentent une longueur axiale qui équivaut sensiblement à l'épaisseur de matériau de la première ou seconde lame (10, 20) au niveau de celle de l'alésage respectif (13, 23).

3. Sécateur selon une des revendications 1 ou 2, **caractérisé en ce que** le goujon pivotant (32) présente une bride (31) en contact avec la face située à l'extérieur de la première lame (10).

4. Sécateur selon une des revendications 1 ou 2, **caractérisé en ce que** le goujon pivotant (32) présente, à son extrémité voisine de la première section circonférentielle (34), une bride saillant radialement (31) qui est en contact avec une surface au niveau de la surface principale située à l'extérieur de la première lame (10) et que la saillie (36) est constituée par une tige (36) qui s'étend axialement à travers la bride (31) dans une zone voisine de la première section circonférentielle (34).

5. Sécateur selon la revendication 4, **caractérisé en ce que** la liaison articulée (13, 23, 30, 41) comprend en outre une seconde pièce (40) qui présente une bride (43) qui est en contact avec une surface au niveau de la surface principale située à l'extérieur de la seconde lame (20).

6. Sécateur selon la revendication 5, **caractérisé en ce que** le goujon pivotant (32) présente, à son extrémité voisine de la seconde section circonférentielle, un alésage fileté (33) et que la seconde pièce (40) de la liaison articulée (13, 23, 30, 41) présente un goujon fileté qui est vissé dans l'alésage fileté (33).

7. Sécateur selon la revendication 5, **caractérisé en ce que** le goujon pivotant (32) présente une section filetée formant un prolongement de la seconde section circonférentielle (35) et sur lequel peut être vissé un écrou fileté reposant sur la face extérieure de la seconde lame et qui constitue la seconde pièce de la liaison articulée (13, 23, 30, 41).
